# EUROPEAN PATENT APPLICATION

(11) **EP 3 792 464 A1**
(43) Date of publication of application: **17.03.2021**
(21) Application number: 19215239.5
(22) Date of filing: 11.12.2019
(51) Int. Cl.: F02B 39/08, F02B 37/10, F16H 39/04, F16H 61/42, B60K 6/48, F02B 41/10

(54) **BI-DIRECTIONAL PUMP/MOTOR**

(30) Priority: 10.09.2019 US 201916565742
(71) Applicant: Hamilton Sundstrand Corporation, Charlotte, NC 28217-4578 (US)
(72) Inventor: LEMMERS, Glenn C. Jr., Loves Park, IL Illinois 61111 (US); BEHLING, David S., Belvidere, IL Illinois 61008 (US); SPIERLING, Todd A., Byron, IL Illinois 61010 (US)
(74) Representative: Dehns

(57) **Abstract**

A system includes a variable displacement pump (VDP) (120) with an inlet and an outlet, a fixed displacement motor (FDM) (122) with an inlet and an outlet. A first line (126) connects the outlet of the VDP to the inlet of the FDM. A second line (132) connects the outlet of the FDM to the inlet of the VDP. A crossover line (138) is in fluid communication between the first and second lines, with a valving system in the crossover line configured so that the flow through the crossover line can switch directions to allow a change in power flow direction between the FDM and the VDP.

## Description

### BACKGROUND

### 1. Field

The present disclosure relates to internal combustion engines, and more particularly to turbo charged internal combustion engines.

### 2. Description of Related Art

In traditional turbo charged internal combustion engines, in most operating modes, the power created by the turbine can be higher than that needed to drive the compressor. In other operating modes, such as idle, the exhaust energy from the engine may not be sufficient to create the desired inlet air boost because the power from the turbine is inadequate to drive the compressor.

The conventional techniques have been considered satisfactory for their intended purpose. However, there is an ever present need for improved systems and methods for improved systems and methods for turbo charging internal combustion engines. This disclosure provides a solution for this need.

### SUMMARY

A system includes a variable displacement pump (VDP) with an inlet and an outlet, a fixed displacement motor (FDM) with an inlet and an outlet. A first line connects the outlet of the VDP to the inlet of the FDM. A second line connects the outlet of the FDM to the inlet of the VDP. A crossover line is in fluid communication between the first and second lines, with a valving system in the crossover line configured so that the flow through the crossover line can switch directions to allow a change in power flow direction between the FDM and the VDP.

The system can be a hydraulic system and can be operatively connected to an internal combustion engine and turbo compressor. It is also contemplated that the FDM can be operatively connected to an electrical machine configured to operate in a generator mode with power flowing from the VDP to the FDM in the first mode, and to operate in a motor mode with power flowing from the FDM to the VDP in the second mode.

A hybrid electric power plant system includes an electric motor operatively connected to a transmission to drive an output shaft. An internal combustion engine is operatively connected to the transmission to drive the output shaft in parallel with the electric motor. A turbo compressor is operatively connected to the internal combustion engine to boost inlet air to the internal combustion engine using power generated from exhaust from the internal combustion engine. A hydraulic system as described above is included, wherein the VDP is mechanically connected to be driven by and to drive the internal combustion engine, and wherein the FDM is mechanically connected to be driven by and to drive the turbo compressor in fluid communication with the internal combustion engine to aspirate the internal combustion engine.

The valving system can include two opposed check valves in a crossover line, wherein the opposed check valves are oriented to flow hydraulic fluid from the crossover line to the first line to add power to the FDM in a first mode to add engine power to the turbo compressor, and to flow hydraulic fluid from the crossover line to the second line to add power to the VDP in a second mode to add power to the internal combustion engine. A charge line can connect to the crossover line between the two opposed check valves to supply hydraulic fluid to the cross-over line for adding power to the FDM in the first mode, and for adding power to the VDP in the second mode. A charge pump can be operatively connected to the VDP and to the charge line for driving hydraulic fluid from a make up reservoir into the charge line. The valve system can be configured to passively change into and out of the first and second modes without active control.

The VDP can include a swash plate configured to adjust speed of a turbo compressor connected to the FDM. The first line, the second line, and the crossover line can be connected in fluid communication to allow power flow to reverse between the first and second modes even though the FDM and VDP do not change rotational directions when changing between the first mode to the second mode. Each of the check valves can include a valve body, a valve disk slidably engaged inside the valve body to seal off flow through the valve body in a first position and to allow flow around the valve disk through the valve body in a second position.

A method includes changing direction of power flowing from a fixed displacement motor (FDM) to a variable displacement pump (VDP) to instead flow from the VDP to the FDM. The method can include changing the direction of power flowing from the VDP to the FDM to instead flow from the FDM to the VDP.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic view of an embodiment of a hybrid electric power plant system constructed in accordance with the present disclosure, showing the electric motor and the turbocharged internal combustion engine;
Fig. 2 is a schematic view of a hydraulic system constructed in accordance with the present disclosure, showing the first mode with flow arrows;
Fig. 3 is a schematic view of the hydraulic system of Fig. 2, showing the second mode with flow arrows; and
Fig. 4 is a schematic view of a portion the system of Fig. 2, showing a configuration for the check valves.

### DETAILED DESCRIPTION OF THE PREFERRED EMBODIMENTS

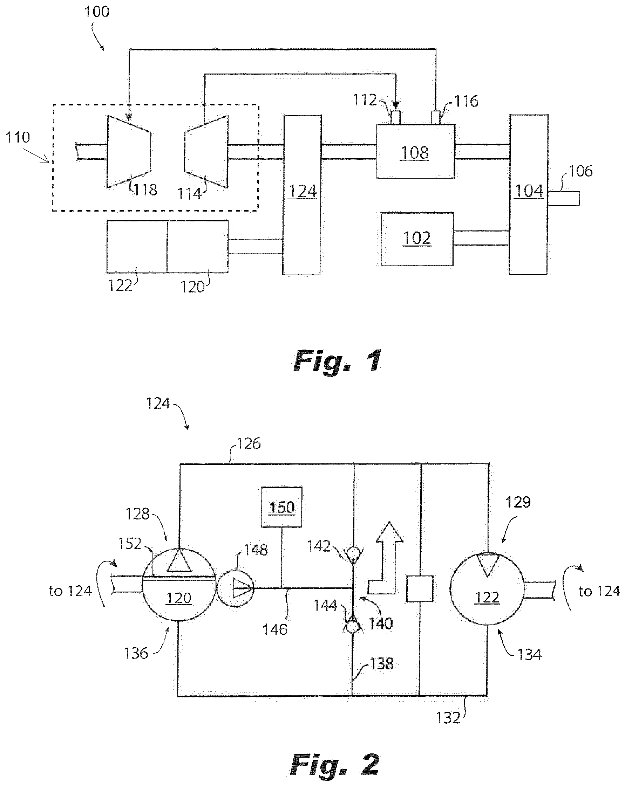

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Figs. 2-4, as will be described. The systems and methods described herein can be used to regulate power flow in turbo charged internal combustion engines.

The hybrid electric power plant system 100 includes an electric motor 102 operatively connected to a transmission 104 to drive an output shaft 106. An internal combustion engine 108 is operatively connected to the transmission 104 to drive the output shaft 106 in parallel with the electric motor 102. A turbo compressor 110 is operatively connected to the internal combustion engine 108 to aspirate or boost inlet air to the internal combustion engine 108 with at air inlet 112 with a compressor 114 driven using power generated in turbine 118 from exhaust from the outlet 116 of the internal combustion engine 108. The turbo compressor 110 is connected to a transmission 124.

A system includes a variable displacement pump (VDP) 120 that is mechanically connected to be driven by and to drive the transmission 124, e.g., by way of an epicyclic differential of the transmission 124. A fixed displacement motor (FDM) 122 is also mechanically connected to be driven by and to drive transmission 124.

With reference now to Fig. 2, The VDP and FDM are hydraulically coupled in a hydraulic sub-system 124. A first hydraulic line 126 connects the outlet 128 of the VDP 120 to the inlet 129 of the FDM 122. A second hydraulic line 132 connects the outlet 134 of the FDM 122 to the inlet 136 of the VDP 120. A crossover line 138 is in fluid communication connecting between the first and second lines 126, 132. The crossover line 138 includes a valving system 140 that is configured so that the flow through the crossover line 138 can switch directions to allow a change in power flow direction between the FDM 122 and the VDP 120.

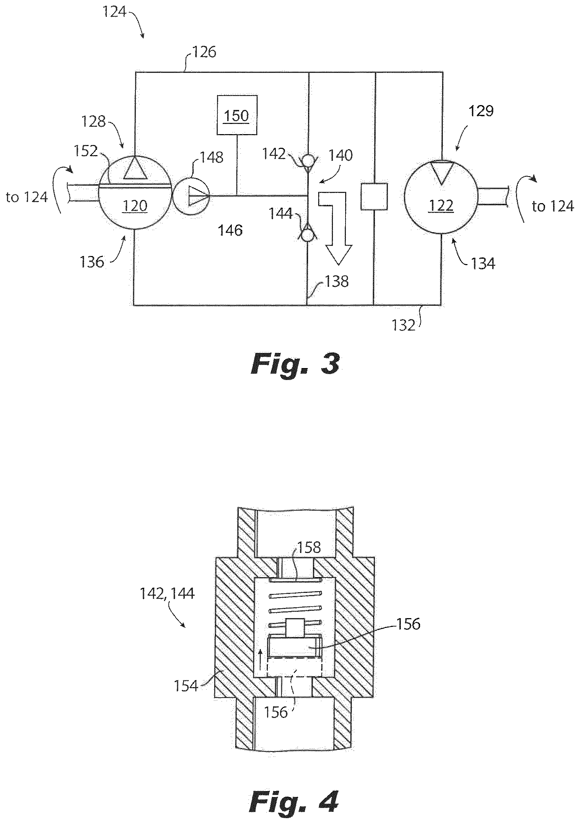

With continued reference to Fig. 2, the valving system 140 includes two opposed check valves 142 and 144 in the crossover line 140. The check valve 142 blocks flow from the first line 126, but allows flow from the crossover line 138 into the first line 126. The check valve 144 blocks flow from the second line 132 but allows flow from the crossover line 138 into the second line 132. This orientation of the check valves 142, 144 allows flow of hydraulic fluid from the crossover line 138 to the first line 126 to add power to the FDM 122 in a first mode to add engine power to the turbo compressor 118, as indicated by the large arrow in Fig. 2. As indicated by the large arrow in Fig. 3, the check valves 142, 144 allow for flow of hydraulic fluid from the crossover line 138 to the second line 132 to add power to the VDP 120 in a second mode to add power to the internal combustion engine 108. A charge line 146 connects to the crossover line 138 between the two opposed check valves 142, 144 to supply hydraulic fluid to the cross-over line 138 for adding power to the FDM 122 in the first mode, and for adding power to the VDP 120 in the second mode. A charge pump 148 can be operatively connected to be driven with or by the VDP 120 to charge the charge line 146 for driving hydraulic fluid from a make up reservoir 150 into the charge line 146. The valve system 140 is configured to passively change into and out of the first and second modes without active control.

The VDP 120 can include a swash plate 152 configured to adjust speed of the turbo compressor 110 by controlling flow out of the outlet 128 of the VDP 120. The first line 126, the second line 132, and the crossover line 138 allow power flow to reverse between the first and second modes even though the FDM 122 and VDP 120 do not change rotational directions when changing between the first mode to the second mode.

With reference to Fig. 4, each of the check valves 142, 144 can include a valve body 154 with a valve disk 156 slidably engaged inside the valve body 154 to seal off flow through the valve body 154 in a first position (indicated in Fig. 4 by the dotted lines) and to allow flow around the valve disk 156 through the valve body 154 in a second position as shown in solid lines in Fig. 4. The spring 158 can bias the valve disk 156 against the valve body toward the closed position.

During operation of the system 100 of Fig. 1, when there is insufficient exhaust energy from the outlet 116 of the internal combustion engine 108 the valving system 140 will passively allow flow from the crossover line 138 into the first line 126 to add more power to the FDM 122, which is first mode shown in Fig. 2. When there is a surplus of power generated in the turbine 118 of Fig. 1, the second mode shown in Fig. 3 is passively activated by movement of the check valves 142, 144 to allow the excess power to be added to the internal combustion engine 108 by flowing extra hydraulic flow into the VDM 120.

While shown and described herein in the exemplary context of the hydraulic sub-system 124 being operatively connected to an internal combustion engine 108 and turbo compressor 110, it is also contemplated that the hydraulic sub-system 124 can be used in any other suitable application. For example, it is also contemplated that the FDM 122 can be operatively connected to an electrical machine (instead of to turbo compressor 118) configured to operate in a generator mode with power flowing from the VDP 120 to the FDM 118 in the first mode, and to operate in a motor mode with power flowing from the FDM 118 to the VDP 120 in the second mode.

The methods and systems of the present disclosure, as described above and shown in the drawings, provide for improved power flow in internal combustion engines. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A system comprising:
a variable displacement pump (VDP) (120) with an inlet and an outlet;
a fixed displacement motor (FDM) (120) with an inlet and an outlet;
a first line (126) connecting the outlet of the VDP to the inlet of the FDM;
a second line (132) connecting the outlet of the FDM to the inlet of the VDP; and
a crossover line (138) in fluid communication between the first and second lines, with a valving system in the crossover line configured so that the flow through the crossover line can switch directions to allow a change in power flow direction between the FDM and the VDP.

2. The system as recited in claim 1, wherein the valving system includes two opposed check valves (142, 144) in the crossover line, wherein the opposed check valves are configured to allow flow of fluid from the crossover line to the first line to add power to the FDM in a first mode to add engine power to a turbo compressor, and to allow flow of fluid from the crossover line to the second line to add power to the VDP in a second mode to add power to an engine.

3. The system as recited in claim 2, further comprising a charge line (146) connecting to the crossover line between the two opposed check valves to supply hydraulic fluid to the cross-over line for adding power to the FDM in the first mode, and for adding power to the VDP in the second mode.

4. The system as recited in claim 3, further comprising a charge pump (148) operatively connected to the VDP and to the charge line for driving fluid from a make up reservoir into the charge line.

5. The system as recited in claim 3, wherein the valve system is configured to passively change into and out of the first and second modes without active control.

6. The system as recited in any preceding claim, wherein the VDP (120) includes a swash plate configured to adjust speed of a turbo compressor connected to the FDM (122).

7. The system as recited in any preceding claim, wherein the first line, the second line, and the crossover line are connected in fluid communication to allow power flow to reverse between the first and second modes even though the FDM and VDP do not change rotational directions when changing between the first mode to the second mode.

8. The system as recited in any preceding claim, wherein the FDM (122) is operatively connected to a turbo compressor.

9. The system as recited in any preceding claim, wherein the FDM (122) is operatively connected to an electrical machine configured to operate in a generator mode with power flowing from the VDP to the FDM in the first mode, and to operate in a motor mode with power flowing from the FDM to the VDP in the second mode.

10. The system as recited in claim 2, wherein each of the check valves (142, 144) includes a valve body, a valve disk slidably engaged inside the valve body to seal off flow through the valve body in a first position and to allow flow around the valve disk through the valve body in a second position.

11. A hybrid electric power plant system comprising:
an electric motor (102) operatively connected to a transmission to drive an output shaft;
an internal combustion engine (108) operatively connected to the transmission to drive the output shaft in parallel with the electric motor;
a turbo compressor (110) operatively connected to the internal combustion engine to boost inlet air to the internal combustion engine using power generated from exhaust from the internal combustion engine; and
the hydraulic system of any preceding claim, wherein the VDP is mechanically connected to be driven by and to drive the internal combustion engine, wherein the FDM is mechanically connected to be driven by and to drive the turbo compressor in fluid communication with the internal combustion engine to aspirate the internal combustion engine.

12. A method comprising:
changing direction of power flowing from a fixed displacement motor (FDM) to a variable displacement pump (VDP) to instead flow from the VDP to the FDM.

13. The method as recited in claim 12, further comprising changing the direction of power flowing from the VDP to the FDM to instead flow from the FDM to the VDP.
